Europäisches Patentamt

European Patent Office

Office européen des brevets

(11) Veröffentlichungsnummer: **0 077 917**
**B1**

(12) **EUROPÄISCHE PATENTSCHRIFT**

(45) Veröffentlichungstag der Patentschrift:
**18.12.85**

(21) Anmeldenummer: **82108640.2**

(22) Anmeldetag: **18.09.82**

(51) Int. Cl.⁴: **G 07 D 7/00**, G 06 K 19/06,
G 07 F 7/02

(54) **Einrichtung zur Echtheitsprüfung von Dokumenten.**

(30) Priorität: **27.10.81 CH 6836/81**

(43) Veröffentlichungstag der Anmeldung:
**04.05.83 Patentblatt 83/18**

(45) Bekanntmachung des Hinweises auf die Patenterteilung:
**18.12.85 Patentblatt 85/51**

(84) Benannte Vertragsstaaten:
**AT DE FR GB NL**

(56) Entgegenhaltungen:
**CH - A - 589 326
DE - A - 2 631 403
DE - A - 2 924 605
US - A - 4 140 373**

**IBM TECHNICAL DISCLOSURE BULLETIN, Band 20, Nr.
6, November 1977, Seiten 2197-2198, New York, USA
R.B. HERRING et al.: "Wafer identification system"**

(73) Patentinhaber: **LGZ LANDIS & GYR ZUG AG,
CH-6301 Zug (CH)**

(72) Erfinder: **Antes, Gregor, Moussonstrasse 14,
CH-8044 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die meisten der heute gebräuchlichen Dokumente, wie z.B. Banknoten, Kreditkarten, Identitätskarten, Fahrkarten, Schecks und dgl., können mit modernen Reproduktionsverfahren mit nicht allzu grossem Aufwand gefälscht werden. Es sind zahlreiche Vorschläge bekannt, die darauf abzielen, auf solchen Dokumenten maschinenlesbare Sicherheitsmerkmale aufzuzeichnen, welche den für eine erfolgversprechende Fälschung erforderlichen Aufwand und damit die Fälschungssicherheit erhöhen. Eine hohe Fälschungssicherheit wird erreicht, wenn die Sicherheitsmerkmale in Form optischer Mikrostrukturen, die einfallendes Licht in charakteristischer Weise beugen, in das Dokument eingegeben werden. Solche Mikrostrukturen, wie z.B. holographisch erzeugte Strukturen, Phasenbeugungsgitter und Kinoforms, sind nur mit hohem technischem Aufwand herstellbar und eine Reproduktion derselben mit den gebräuchlichen reprographischen Verfahren ist nicht möglich.

Bei Dokumenten mit einem Substrat aus thermoplastischem Material werden die Mikrostrukturen unmittelbar in das Substrat eingeprägt (CH-A-574 144). Papierdokumente werden vor dem Einprägen der Mikrostrukturen mit einer dünnen thermoplastischen Schicht beschichtet (DE-C-2 555 214). Mittels einer Schutzschicht in Form einer auflaminierten Folie (CH-A-588 358) oder einer Lackschicht (GB-A-2 082 593) kann die Mikrostruktur vor mechanischer Beschädigung geschützt werden. Die Schutzschicht kann ausserdem dazu dienen, die Mikrostruktur dem menschlichen Auge zu verbergen.

Bei der maschinellen Echtheitsprüfung solcher Dokumente wird die Mikrostruktur mit einem Lesestrahlenbündel, das eine vorbestimmte Wellenlänge bzw. einen vorbestimmten engen Wellenlängenbereich aufweist, beleuchtet. Mittels einer Lichtfühleranordnung werden eine oder mehrere Komponenten des an der Mikrostruktur gebeugten Lesestrahles empfangen, und mittels einer elektronischen Auswerteeinrichtung wird überprüft, ob die Intensität bzw. das Intensitätsverhältnis dieser Komponenten innerhalb der zu erwartenden Grenzwerte liegt (CH-A-589 897).

Der Erfindung liegt die Aufgabe zugrunde, eine Einrichtung zur Echtheitsprüfung von Dokumenten der im Oberbegriff des Anspruches 1 angegebenen Art zu schaffen, die sich durch eine besonders hohe Zuverlässigkeit der Echtheitsprüfung und Unabhängigkeit von Störeinflüssen auszeichnet.

Diese Aufgabe wird erfindungsgemäss durch die im Kennzeichen des Anspruches 1 angegebenen Merkmale gelöst.

Durch die erfindungsgemässe Lösung lassen sich Fälschungen erkennen, bei denen versucht wird, die Anwesenheit einer Mikrostruktur durch nicht dispersive optische Ablenkelemente vorzutäuschen. Ferner können dadurch nicht dispersive Störeinflüsse eliminiert werden.

Vorteilhafte Ausgestaltungen der Erfindung sind Gegenstände der abhängigen Ansprüche.

Nachfolgend werden einige Ausführungsbeispiele der Erfindung anhand der Zeichnungen näher erläutert.

Es zeigt:

Fig. 1 eine Prinzipdarstellung einer Echtheitsprüfeinrichtung,

Fig. 2 eine Beleuchtungseinrichtung,

Fig. 3 und 4 zwei verschiedene Auswerteeinrichtungen,

Fig. 5 bis 7 weitere Echtheitsprüfeinrichtungen und

Fig. 8 ein Diagramm.

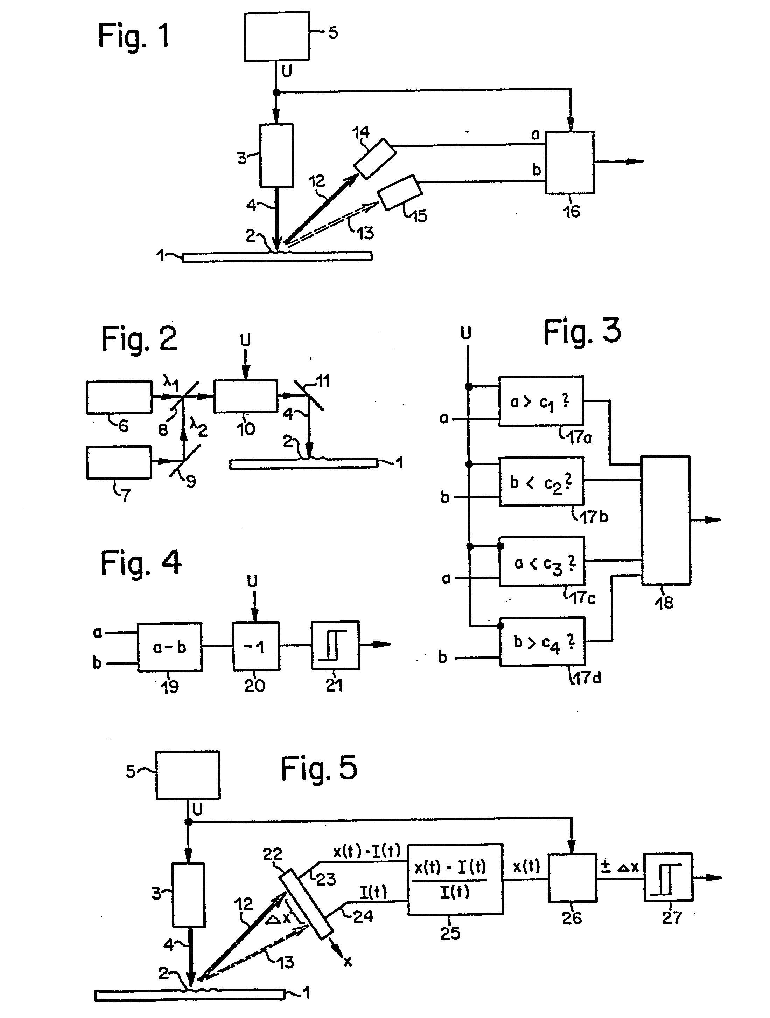

In der Fig. 1 bedeutet 1 ein Dokument, das z.B. eine Banknote, Kreditkarte, Identitätskarte, Fahrkarte, ein Scheck und dgl. sein kann und mindestens ein Sicherheitsmerkmal in Form einer optischen Mikrostruktur 2 enthält. Die Mikrostruktur 2 ist solcher Art, dass sie einen einfallenden Lichtstrahl durch Beugung in mindestens eine vorbestimmte Richtung ablenkt. Solche Mikrostrukturen, wie z.B. Hologramme, Beugungsgitter und Kinoforms, können durch Prägen in eine thermoplastische Schicht des Dokumentes 1 eingegeben werden und mittels einer in der Zeichnung nicht dargestellten auflaminierten Folie oder Lackschicht geschützt werden.

Eine Beleuchtungseinrichtung 3 wirft ein Lesestrahlenbündel 4, das einen kleinen Querschnitt und nur eine geringe Divergenz oder Konvergenz aufweist, auf mindestens eine Teilfläche der Mikrostruktur 2. Die Beleuchtungseinrichtung 3 ist durch eine Steuereinrichtung 5 derart steuerbar, dass die Wellenlänge des Lesestrahlenbündels 4 von einem ersten Wert $\lambda_1$ auf einen zweiten Wert $\lambda_2$ und umgekehrt umgeschaltet werden kann, ohne dass dadurch die zentrale Achse des Lesestrahlenbündels 4 und die Intensitätsverteilung desselben in einer zur Strahlachse senkrechten Ebene verändert werden. Zur Umschaltung der Wellenlänge gibt die Steuereinrichtung 5 an die Beleuchtungseinrichtung 3 eine Steuerspannung U ab, die zwei verschiedene Werte annehmen kann. Die Umschaltung erfolgt vorteilhaft alternierend, so dass die weiter unten beschriebene Detektion wechselstrommässig erfolgen kann.

In der Fig. 2 ist ein Ausführungsbeispiel für die Beleuchtungseinrichtung 3 dargestellt. Zwei Laser 6, 7 erzeugen je einen Lichtstrahl mit der Wellenlänge $\lambda_1$ bzw. $\lambda_2$. Mittels eines halbdurchlässigen Spiegels 8 werden der Strahl des Lasers 6 und der an einem Spiegel 9 umgelenkte Strahl des Lasers 7 einander überlagert. Ein von der Steuerspannung U gesteuerter elektrooptischer Modulator 10 sperrt alternierend den einen der beiden Strahlen mindestens teilweise und lenkt den anderen über einen Spiegel 11 auf die Mikrostruktur 2 des Dokumentes 1.

Anstelle der beiden Laser 6, 7 können z.B. zwei Leuchtdioden eingesetzt werden. Wenn die Laser 6, 7 bzw. die Leuchtdioden impulsweise betrieben werden, so kann der elektrooptische Modulator 10 entfallen.

Die an der Mikrostruktur 2 gebeugte Komponente des Lesestrahlenbündels 4 wird in mindestens eine vorbestimmte Richtung abgelenkt. Diese Richtung ist von der Wellenlänge des Lesestrahlenbündels 4 abhängig. Bei der Wellenlänge $\lambda_1$ entsteht z.B. ein Lichtstrahl 12 und bei der Wellenlänge $\lambda_2$ ein Lichtstrahl 13 (Fig. 1). Die Richtungen der Intensitätsschwerpunkte der von der Mikrostruktur 2 gebeugten Komponente alternieren also zwischen zwei vorbestimmten Winkeln.

Eine Lichtfühleranordnung, die im Beispiel der Fig. 1 aus zwei Lichtfühlern 14, 15 besteht, empfängt die an der Mikrostruktur 2 gebeugten Lichtstrahlen 12, 13. Zur Auswertung der von den Lichtfühlern 14, 15 abgegebenen elektrischen Signale a, b und zur Ja/Nein-Entscheidung dient eine Auswerteeinrichtung 16. Diese wird ebenfalls durch die Steuerspannung U gesteuert und erzeugt an ihrem Ausgang dann ein Ja-Signal, wenn der Intensitätsschwerpunkt der von der Mikrostruktur 2 gebeugten Komponente des Lesestrahlenbündels 4 beim Wert $\lambda_2$ der Wellenlänge in einer anderen Richtung liegt als beim Wert $\lambda_1$.

Sind gemäss der Fig. 1 die Lichtfühler 14, 15 so angeordnet, dass der Lichtfühler 14 den Lichtstrahl 12 und der Lichtfühler 15 den Lichtstrahl 13 empfängt, so wird das Ja-Signal erzeugt und somit das Dokument 1 als echt betrachtet, wenn der Intensitätsschwerpunkt beim Wert $\lambda_1$ der Wellenlänge in einer ersten vorbestimmten Richtung und beim Wert $\lambda_2$ in einer zweiten vorbestimmten Richtung liegt. Ein Dokument, das keine Mikrostruktur 2 mit den vorbestimmten dispersiven Eigenschaften aufweist, wird daher zurückgewiesen.

Die Fig. 3 zeigt ein einfaches Ausführungsbeispiel einer Auswerteeinrichtung mit vier Komparatoren 17a bis 17d und einem UND-Glied 18. Die Komparatoren 17a bis 17d werden von der Steuerspannung U derart gesteuert, dass bei $\lambda_1$ der Komparator 17a das Signal a mit einem Schwellenwert $c_1$ und der Komparator 17b das Signal b mit einem Schwellenwert $c_2$ vergleicht, während bei $\lambda_2$ der Komparator 17c das Signal a mit einem Schwellenwert $c_3$ und der Komparator 17d das Signal b mit einem Schwellenwert $c_4$ vergleicht. Ist bei $\lambda_1$

$$a > c_1 \text{ und } b < c_2$$

und bei $\lambda_2$

$$a > c_3 \text{ und } b < c_4,$$

so wird am Ausgang des UND-Gliedes 18 ein Ja-Signal abgegeben.

Die Auswerteeinrichtung nach der Fig. 4 besteht aus einem Differenzglied 19, einem durch die Steuerspannung U gesteuerten Inverter 20 und einem Komparator 21. Bei $\lambda_1$ wird die Differenz a-b der Signale a und b und bei $\lambda_2$ die Differenz b-a an den Komparator 21 gelegt und in diesem mit gespeicherten Grenzwerten verglichen. Ist die Differenz sowohl bei $\lambda_1$ als auch bei $\lambda_2$ grösser als der Grenzwert, so gibt der Komparator 21 ein Ja-Signal ab. Anstelle der Differenz a-b bzw. b-a kann auch der Quotient a/b bzw. b/a gebildet und mit gespeicherten Grenzwerten verglichen werden. Es ist leicht ersichtlich, dass nicht dispersive, d.h. von der Wellenlänge unabhängige Störeinflüsse, wie z.B. Reflexionen an der der Mikrostruktur 2 überlagerten Schutzschicht, durch die Ermittlung der Differenz oder des Quotienten der Signale a und b eliminiert werden.

Anhand der Fig. 5 bis 8 werden im folgenden Ausführungsbeispiele erläutert, bei denen nicht die absolute Richtung der Intensitätsschwerpunkte, sondern die relative Verschiebung des Intensitätsschwerpunktes detektiert wird, die beim Umschalten der Wellenlänge auftritt, wobei die Auswerteeinrichtung ein Ja-Signal erzeugt, wenn eine Komponente bzw. der Betrag und das Azimut dieser Verschiebung innerhalb vorbestimmter Grenzen liegt.

In der Fig. 5 weisen gleiche Bezugszeichen wie in der Fig. 1 auf gleiche Teile hin. Die Mikrostruktur 2 des Dokumentes 1 wird auf gleiche Weise mit einem Lesestrahlenbündel 4 beleuchtet wie bei der Anordnung nach der Fig. 1. Als Lichtfühleranordnung dient ein sog. einachsiger kontinuierlicher Positionssensor (single axis position sensing detector) 22, der in einer solche räumlichen Lage angeordnet ist, dass er sowohl den Lichtstrahl 12 als auch den Lichtstrahl 13 empfangen kann, d.h. seine im folgenden mit x-Achse bezeichnete Detektionsachse liegt in der gemeinsamen Ebene der beiden Lichtstrahlen 12 und 13. Solche Positionssensoren (z.B. der Typ PIN-LSC/30D von United Detector Technology, Inc., mit dem zugehörigen Verstärker 301B-AC vom gleichen Hersteller) besitzen zwei Ausgänge, von denen der erste Ausgang 23 ein zur x-Koordinate des Intensitätsschwerpunktes sowie zur Intensität I proportionales elektrisches Signal und der zweite Ausgang 24 ein zur Intensität I proportionales elektrisches Signal abgibt. Bei alternierender Umschaltung der Wellenlänge und entsprechender alternierender Verschiebung des Intensitätsschwerpunktes in der x-Achse entsteht somit am Ausgang 23 ein elektrisches Signal $x(t) \cdot I(t)$ und am Ausgang 24 ein elektrisches Signal $I(t)$, wobei t die Zeit bedeutet.

Die Ausgänge 23, 24 des Positionssensors 22 sind an ein Dividierglied 25 angeschlossen, an dessen Ausgang ein elektrisches Positionssignal $x(t)$ entsteht, welches ein von der Intensität I unabhängiges lineares Mass für die x-Koordinate des Intensitätsschwerpunktes darstellt. Der Ausgang des Dividiergliedes 25 ist mit einer Detektionsschaltung 26 verbunden, die vom Steuersignal U gesteuert wird und aus dem Signal $x(t)$ die x-Komponente der Verschiebung des Intensitätsschwerpunktes, d.h. den Betrag $\triangle x$ und das Vorzeichen der Verschiebung in der x-Achse, ermittelt. Der Betrag $\triangle x$ entspricht der Amplitude des Signals $x(t)$. Als Detektionsschaltung 26 eignet sich vorteilhaft ein sog. Lock-in-Verstärker. Der Ausgang der Detektionsschaltung 26 ist an einen Komparator 27 angeschlossen, welcher das Ausgangssignal $\pm \triangle x$ der Detektionsschaltung 26 mit gespeicherten Grenzwerten vergleicht und ein Ja-Signal abgibt, wenn $\pm \triangle x$ innerhalb dieser Grenzwerte liegt.

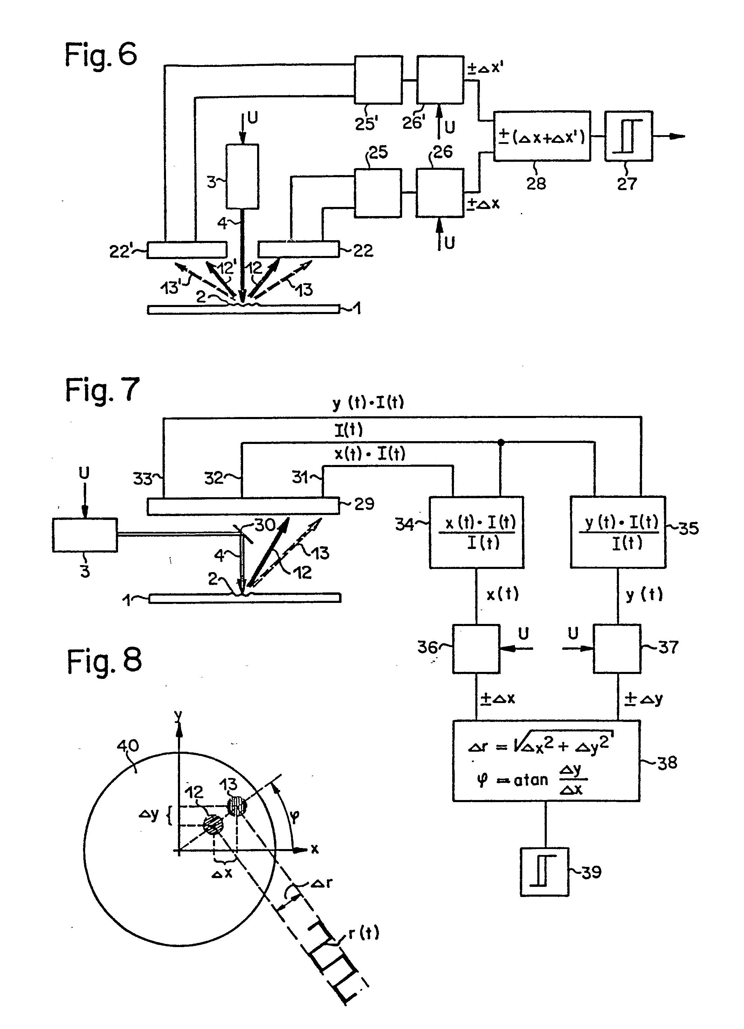

Ist die Mikrostruktur 2 solcher Art, dass sie das Lesestrahlenbündel 4 in mehrere vorbestimmte Richtungen beugt, so können anstelle eines einzigen Positionssensors 22 mehrere solche Positionssensoren angeordnet werden. Die Fig. 6 zeigt ein Beispiel für die Echtheitsprüfung einer Mikrostruktur 2, bei welcher bei $\lambda_1$ ausser dem Lichtstrahl 12 noch ein Lichtstrahl 12' der konjugierten Beugungsordnung und bei $\lambda_2$ ausser dem Lichtstrahl 13 noch ein Lichtstrahl 13' in der konjugierten Beugungsordnung auftritt. Der Positionssensor 22 detektiert die Lichtstrahlen 12 und 13, während zur Detektion der Lichtstrahlen 12' und 13' ein weiterer Positionssensor 22' angeordnet ist. Die beiden Ausgänge des Positionssensors 22' sind mit einem Dividierglied 25' verbunden, welchem eine Detektionsschaltung 26' nachgeschaltet ist. Ein Addierglied 28 addiert das Ausgangssignal ± △x der Detektionsschaltung 26 mit dem Ausgangssignal ± △x' der Detektionsschaltung 26'. Das Summensignal ± (△x + △x') wird im Komparator 27 mit gespeicherten Grenzwerten verglichen.

Bei der Anordnung nach der Fig. 7 ist zur Detektion der Lichtstrahlen 12, 13 ein zweiachsiger kontinuierlicher Positionssensor 29 (dual axis position sensing detector, z.B. der Typ PIN-SC/25 von United Detector Technology, Inc.) vorgesehen. Dieser ist in einer zum Dokument 1 parallelen Ebene angeordnet. Ein zwischen dem Dokument 1 und dem Positionssensor 29 liegender Spiegel 30 lenkt das von der Beleuchtungseinrichtung 3 erzeugte Lesestrahlenbündel 4 senkrecht und koaxial zum Positionssensor 29 auf die Mikrostruktur 2. Ähnlich wie der Positionssensor 22 (Fig. 5) besitzt der Positionssensor 29 einen ersten Ausgang 31, der ein zur x-Koordinate des Intensitätsschwerpunktes sowie zur Intensität I proportionales elektrisches Signal abgibt, und einen zweiten Ausgang 32, an dem ein zur Intensität I proportionales elektrisches Signal entsteht. Ein dritter Ausgang 33 des Positionssensors 29 liefert ein zur y-Koordinate des Intensitätsschwerpunktes sowie zur Intensität I proportionales elektrisches Signal. Bei alternierender Umschaltung der Wellenlänge entstehen somit die Signale $x(t) \cdot I(t)$, $y(t) \cdot I(t)$ und $I(t)$. Die Ausgänge 31 und 32 sind an ein Dividierglied 34 und die Ausgänge 33 und 32 an ein Dividierglied 35 angeschlossen, welche die elektrischen Positionssignale $x(t)$ und $y(t)$ liefern. Eine dem Dividierglied 34 nachgeschaltete Detektionsschaltung 36 ermittelt die x-Komponente ± △x der Verschiebung des Intensitätsschwerpunktes und eine dem Dividierglied 35 nachgeschaltete Detektionsschaltung 37 ermittelt die y-Komponente ± △y der Verschiebung. Die Detektionsschaltungen 36, 37 werden wie die Detektionsschaltung 26 (Fig. 5) von der Steuerspannung U gesteuert und können ebenfalls Lock-in-Verstärker sein. Die Ausgänge der Detektionsschaltungen 36, 37 sind an ein Rechenglied 38 angeschlossen, welches aus der x-Komponente ± △x und aus der y-Komponente ± △y der Verschiebung des Intensitätsschwerpunktes den Betrag △r und das Azimut φ der Verschiebung z.B. nach den Beziehungen

$$\triangle r = \sqrt{\triangle x^2 + \triangle y^2}$$
$$\varphi = \operatorname{atan} \frac{\triangle y}{\triangle x}$$

berechnet. Das Rechenglied 38 ist mit einem Komparator 39 zum Vergleich der Ausgangssignale des Rechengliedes 38 mit gespeicherten Grenzwerten verbunden.

Das Diagramm der Fig. 8 dient zur Vertiefung des Verständnisses der Anordnung gemäss der Fig. 7. Die Detektionsfläche des Positionssensors 29 ist in der Fig. 8 mit 40 bezeichnet. Beim Wert $\lambda_1$ der Wellenlänge des Lesestrahlenbündels 4 trifft der Lichtstrahl 12 und beim Wert $\lambda_2$ der Lichtstrahl 13 auf die Detektionsfläche 40. Die Umschaltung der Wellenlänge bewirkt eine Verschiebung des Intensitätsschwerpunktes um den Betrag △r mit dem Azimut φ, wobei sich der Betrag △r aus der Komponente △x in der x-Achse und der Komponente △y in der y-Achse zusammensetzt. Mit $r(t)$ ist der zeitliche Verlauf eines elektrischen Signals dargestellt, das im Rechenglied 38 aus den Signalen $x(t)$ und $y(t)$ gebildet werden kann und den zeitlichen Verlauf der Verschiebung des Intensitätsschwerpunktes darstellt.

Die Anordnung nach der Fig. 7 zeichnet sich durch den besonderen Vorteil aus, dass sie universell für verschiedene Beugungscharakteristika der Mikrostruktur 2 verwendbar ist, da die Beugungscharakteristik beim Aufbau der Anordnung nicht bekannt sein muss und lediglich die Grenzwerte, mit denen die Ausgangssignale des Rechengliedes 38 im Komparator 39 verglichen werden, dem zu prüfenden Echtheitsmuster anzupassen sind.

Bei etwa senkrechter Beleuchtungsrichtung bedingt die Anordnung nach der Fig. 7, dass die Mikrostruktur 2 eine sog. Blaze-Wirkung aufweist, d.h. dass störende Nebenstrahlen in der konjugierten Beugungsordnung weitgehend unterdrückt werden, da andernfalls bei gleichzeitiger Detektion der bei gleicher Intensität in der normalen und in der konjugierten Beugungsordnung auftretenden Strahlen der gemeinsame Intensitätsschwerpunkt beider Strahlenlängenwelleninvariant wäre. Zur Echtheitsprüfung von Mikrostrukturen ohne Blaze-Wirkung ist eine schiefe Beleuchtungsrichtung oder eine asymmetrische Anordnung des Positionssensors 29 erforderlich.

Anstelle der kontinuierlichen Positionssensoren 22, 22' und 29 kann auch eine einreihige oder mehrreihige Lichtfühler-Matrix verwendet werden, wobei die Koordinate des Lichtschwerpunktes mittels einer Auswertelogik aus den elektrischen Signalen der einzelnen Lichtfühler ermittelt und in digitaler Form dargestellt wird.

Bei den vorstehenden Erläuterungen 1 wurde angenommen, dass das Dokument 1 während der Echtheitsprüfung ruht. Mittels einer nicht dargestellten Transporteinrichtung kann eine Relativbewegung zwischen dem Dokument einerseits und der Beleuchtungsrichtung sowie der Lichtfühleranordnung andererseits erzeugt werden, um die Mikrostruktur 2 entlang einer Messspur kontinuierlich abzutasten. Ist die Beugungscharakteristik der Mikrostruktur 2 entlang der Messspur veränderlich, so muss die Umschaltung der Wellenlänge mit einer im Vergleich zur Änderung der Beugungscharakteristik hohen Frequenz erfolgen und die Ausgangssignale der Detektionsschaltungen 26, 26', 36, 37 bzw. des Rechengliedes 38 können dann in den Komparatoren 27, 39 mit Grenzwertfunktionen verglichen werden, die dem Sollwertverlauf der Signale △x, △y, △r und φ entsprechen. Dabei wird vorteilhaft auch geprüft, ob die zeitliche Phasenlage der Verschiebung des Intensitätsschwerpunktes relativ zur Phasenlage der Umschaltung der Wellenlänge innerhalb vorbestimmter Grenzen liegt.

Die beschriebenen Lösungen, insbesondere die Detektion der relativen Verschiebung des Intensitätsschwerpunktes, ermöglichen eine zuverlässige Echtheitsprüfung auch dann, wenn die optischen Nutzsignale durch Einflüsse verschiedenster Art geschwächt und gestört sind. Dabei können insbesondere folgende Fälle auftreten:

1. Eine produktionsbedingte oder alterungsbedingte Aufrauhung einer der Mikrostruktur 2 überlagerten Schutzschicht bewirkt eine Verbreiterung der Beugungsmaxima. Dies führt einerseits zu einer Schwächung der Nutzsignale, andererseits kann die Beugungsrichtung weniger genau bestimmt werden. Da vom Positionssensor 22 bzw. 29 der gesamte Strahlenquerschnitt aufgefangen wird, ändert sich aber die ermittelte Koordinate des Intensitätsschwerpunktes nicht.

2. Eine mangelhafte Planlage des Dokumentes, Falten und wellenförmige Unebenheiten führen zu unbestimmten Beugungsrichtungen. Dadurch ändert sich zwar der absolute Beugungswinkel, bei nicht zu grossen Beugungswinkeln und Wellenlängendifferenzen bleibt jedoch die Winkeldifferenz zwischen den Lichtstrahlen 12 und 13 und damit die relative Verschiebung des Intensitätsschwerpunktes in erster Näherung invariant.

3. Reflexionen an der Oberfläche der Schutzschicht können als Störsignale in der Apertur der Lichtfühleranordnung fallen. Solche Reflexionen an glatten oder rauhen, nichtbeugenden Oberflächen sind aber sowohl bezüglich ihrer Intensität als auch in ihrer Richtungsverteilung wellenlängenunabhängig und werden bei der Detektion eliminiert.

4. Andere nicht beugungsbedingte Störsignale, beispielsweise eine örtlich variierende Reflektivität des Untergrundes der Mikrostruktur 2, aufgebrachte Farbmuster oder Kratzer, verändern zwar ebenfalls die Gesamtintensität des am Dokument reflektierten Lichtes, nicht jedoch die bei der Wellenlängenumschaltung auftretende Verschiebung des Intensitätsschwerpunktes.

5. Wird Laserlicht zur Abtastung verwendet, so treten sog. Specklingeffekte (Granulation) auf, wodurch die Bestimmung der Beugungsrichtung erschwert wird und störende Rauschsignale entstehen. Auch Specklingeffekte verändern aber in erster Näherung den Intensitätsschwerpunkt nicht.

**Patentansprüche**

1. Einrichtung zur Echtheitsprüfung von Dokumenten (1), die mindestens ein maschinenlesbares Sicherheitsmerkmal in Form einer optischen Mikrostruktur (2) enthalten, welche mindestens eine Komponente eines von einer Beleuchtungseinrichtung (3; 6, 7) ausgehenden Lesestrahlenbündels (4) durch Beugung in eine vorbestimmte Richtung ablenkt, wobei die Wellenlänge des Lesestrahlenbündels (4) einen vorbestimmten ersten Wert aufweist, mit einer Lichtfühleranordnung (14, 15; 22; 22, 22'; 29) zum Empfang der an der Mikrostruktur (2) gebeugten Lesestrahlen und mit einer Auswerteeinrichtung (16; 17, 18; 19-21; 25-28; 34-39) zur Auswertung der von der Lichtfühleranordnung abgegebenen elektrischen Signale sowie zur Ja/Nein-Entscheidung, dadurch gekennzeichnet, dass die Beleuchtungseinrichtung (3) durch eine Steuereinrichtung (5) derart steuerbar ist, dass die Wellenlänge des Lesestrahlenbündels (4) zwischen dem ersten und einem zweiten vorbestimmten Wert umgeschaltet wird, und dass mittels der Auswerteeinrichtung (16; 17, 18; 19-21; 25-28; 34-39) ein Ja-Signal erzeugbar ist, wenn der Intensitätsschwerpunkt der von der Mikrostruktur (2) gebeugten Komponente des Lesestrahlenbündels (4) beim zweiten Wert der Wellenlänge in einer anderen Richtung liegt als beim ersten Wert der Wellenlänge.

2. Einrichtung nach Anspruch 1, dadurch gekennzeichnet, dass die Wellenlänge des Lesestrahlenbündels (4) alternierend zwischen den beiden Werten umschaltbar ist.

3. Einrichtung nach Anspruch 1 oder 2, dadurch gekennzeichnet, dass mittels der Auswerteeinrichtung (16; 17, 18; 19-21) ein Ja-Signal erzeugbar ist, wenn der Intensitätsschwerpunkt beim ersten Wert der Wellenlänge in einer ersten vorbestimmten Richtung und beim zweiten Wert in einer zweiten vorbestimmten Richtung liegt.

4. Einrichtung nach Anspruch 1 oder 2, dadurch gekennzeichnet, dass mittels der Auswerteeinrichtung (25-28; 34-39) ein Ja-Signal erzeugbar ist, wenn eine Komponente ($\triangle x$; $\triangle y$) und/oder der Betrag ($\triangle r$) und/oder das Azimut ($\triangle \varphi$) der Verschiebung des Intensitätsschwerpunktes beim Umschalten der Wellenlänge innerhalb vorbestimmter Grenzen liegt.

5. Einrichtung nach Anspruch 4, dadurch gekennzeichnet, dass die Lichtfühleranordnung aus mindestens einem einachsigen elektrooptischen Positionssensor (22; 22, 22') besteht.

6. Einrichtung nach Anspruch 4, dadurch gekennzeichnet, dass die Lichtfühleranordnung aus einem zweiachsigen elektrooptischen Positionssensor (29) besteht.

7. Einrichtung nach Anspruch 5 oder 6, dadurch gekennzeichnet, dass der Positionssensor (22; 29) ein kontinuierlicher Positionssensor mit mindestens zwei Ausgängen (23, 24; 31, 32, 33) ist, wobei der erste Ausgang (23; 31) ein zur x-Koordinate des Intensitätsschwerpunktes sowie zur Intensität proportionales elektrisches Signal und der zweite Ausgang (24; 32) ein zur Intensität proportionales elektrisches Signal abgibt, dass der erste und der zweite Ausgang (23; 31 bzw. 24; 32) an ein Dividierglied (25; 34) angeschlossen sind und dass das Dividierglied (25; 34) mit einer Detektionsschaltung (26; 36) zur Ermittlung der x-Komponente ($\triangle x$) der Verschiebung des Intensitätsschwerpunktes verbunden ist.

8. Einrichtung nach Anspruch 7, dadurch gekennzeichnet, dass ein dritter Ausgang (33) des Positionssensors (29) ein zur y-Koordinate des Intensitätsschwerpunktes sowie zur Intensität proportinales Ausgangssignal abgibt, dass der dritte und der zweite Ausgang (33; 32) an ein zweites Dividierglied (35) angeschlossen sind und dass das zweite Dividierglied (35) mit einer zweiten Detektionsschaltung (37) zur Ermittlung der y-Komponente ($\triangle y$) der Verschiebung des Intensitätsschwerpunktes verbunden ist.

9. Einrichtung nach Anspruch 8, dadurch gekennzeichnet, dass die erste und die zweite Detektionsschaltung (36; 37) an ein Rechenglied (38) angeschlossen sind, welches aus der x-Komponente ($\triangle x$) und aus der y-Komponente ($\triangle y$) der Verschiebung

des Intensitätsschwerpunktes den Betrag (△r) und das Azimut (φ) der Verschiebung ermittelt.

10. Einrichtung nach einem der Ansprüche 7 bis 9, dadurch gekennzeichnet, dass die Detektionsschaltungen (26; 36; 37) an einen Komparator (27; 39) zum Vergleich des Ausgangssignals der Detektionsschaltung (26; 36; 37) mit vorbestimmten Grenzwerten angeschlossen sind.

11. Einrichtung nach Anspruch 9, dadurch gekennzeichnet, dass das Rechenglied (38) an einen Komparator (39) zum Vergleich der Ausgangssignale des Rechengliedes (38) mit vorbestimmten Grenzwerten angeschlossen ist.

12. Einrichtung nach Anspruch 2 und einem der Ansprüche 3 bis 11, mit einer Transporteinrichtung zur Erzeugung einer Relativbewegung zwischen dem Dokument (1) einerseits und der Beleuchtungseinrichtung (3) sowie der Lichtfühleranordnung (14, 15; 22; 22, 22'; 29) andererseits, dadurch gekennzeichnet, dass mittels der Auswerteeinrichtung (16; 17, 18; 19-21; 25-28; 34-39) ein Ja-Signal erzeugbar ist, wenn die zeitliche Phasenlage der Verschiebung des Intensitätsschwerpunktes relativ zur Phasenlage der Umschaltung der Wellenlänge innerhalb vorbestimmter Grenzen liegt.

## Claims

1. Apparatus for checking the authenticity of documents (1) which include at least one machine-readable security feature in the form of an optical microstructure (2) which deflects at least one component of a reading beam (4) emitted by an illumination means (3; 6, 7), by diffraction in a predetermined direction, wherein the wavelength of the reading beam (4) is of a predetermined first value, comprising a light sensor arrangement (14, 15; 22; 22, 22'; 29) for receiving the reading rays which are diffracted at the microstructure (2), and an evaluation means (16; 17, 18; 19-21; 25-28; 34-39) for evaluating the electrical signals produced by the light sensor arrangement and for a yes/no decision, characterised in that the illumination means (3) is controllable by a control means (5) in such a way that the wavelength of the reading beam (4) is changed over between the first predetermined value and a second predetermined value, and that a yes signal can be produced by means of the evaluating means (16; 17, 18; 19-21; 25-28; 34-39) if the centre of intensity of the component of the light beam (4), which is diffracted by the microstructure (2), is in a different direction with the second value of the wavelength to that with the first value of the wavelength.

2. Apparatus according to claim 1, characterised in that the wavelength of the reading beam (4) can be alternately changed between the two values.

3. Apparatus according to claim 1 or claim 2, characterised in that a yes signal can be produced by means of the evaluating means (16; 17, 18; 19-21) if the centre of intensity at the first value of the wavelength lies in a first predetermined direction and at the second value lies in a second predetermined direction.

4. Apparatus according to claim 1 or claim 2, characterised in that a yes signal can be produced by means of the evaluating means (25-28; 34-39) when a component (△x; △y) and/or the amount (△r) and/or the azimuth (△φ) of the shift in the centre of intensity when switching over the wavelength lies within predetermined limits.

5. Apparatus according to claim 4, characterised in that the light sensor arrangement comprises at least one single-axis electro-optical position sensor (22; 22, 22').

6. Apparatus according to claim 4, characterised in that the light sensor arrangement comprises a dual-axis electro-optical position sensor (29).

7. Apparatus according to claim 5 or claim 6, characterised in that the position sensor (22; 29) is a continuous position sensor with a least two outputs (23; 24; 31, 32, 33), wherein the first output (23; 31) produces an electrical signal which is proportional to the x-co-ordinate of the centre of intensity and the second output (24; 32) produces an electrical signal which is proportional to the intensity, that the first and second outputs (23; 31 and 24; 32 respectively) are connected to a dividing member (25; 34) and that the dividing member (25; 34) is connected to a detection circuit (26; 36) for determining the x-component (△x) of the shift in the centre of intensity.

8. Apparatus according to claim 7, characterised in that a third output (33) of the position sensor (29) produces an output signal which is proportional to the y-co-ordinate of the centre of intensity and to the intensity and that the third and the second outputs (33; 32) are connected to a second dividing member (35) and that the second dividing member (35) is connected to a second detection circuit (37) for determining the y-component (△y) of the shift of the centre of intensity.

9. Apparatus according to claim 8, characterised in that the first and second detection circuits (36; 37) are connected to a computing means (38) which, from the x-component (△x) and the y-component (△y) of the shift of the centre of intensity determines the amount (△r) and the azimuth (φ) of the shift.

10. Apparatus according to one of claims 7 to 9, characterised in that the detection circuits (26; 36; 37) are connected to a comparator (27; 39) for comparing the output signal of the detection circuit (26; 36; 37) to predetermined limit values.

11. Apparatus according to claim 9, characterised in that the computing means (38) is connected to a comparator (39) for comparing the output signals of the computing means (38) to predetermined limit values.

12. Apparatus according to claim 2 and one of claims 3 to 11, including a conveyor means for producing a relative movement between the document (1) on the one hand and the illumination means (3) and the light sensor arrangement (14, 15; 22; 22, 22'; 29) on the other hand, characterised in that a yes signal can be produced by means of the evaluating means (16; 17, 18; 19-21; 25-28; 34-39) when the phase position in respect of time of the shift in the centre of intensity relative to the phase position of the change-over in wavelength lies within predetermined limits.

## Revendications

1. Dispositif de contrôle de l'authenticité de documents (1) comportant au moins une caractéristique de sécurité lisible à la machine, sous forme d'une microstructure optique (2) qui dévie une composante au moins d'un faisceau de lecture (4) provenant d'un dispositif d'éclairage (3; 6, 7) par diffraction suivant une direction prédéterminée, la longueur d'onde du faisceau de lecture (4) présentant une première valeur prédéterminée; avec un dispositif photorécepteur (14, 15; 22; 22, 22'; 29) pour la réception des faisceaux de lecture diffractés par la microstructure (2) et avec un dispositif traducteur (16; 17, 18; 19-21; 25-28; 34-39) traduisant les signaux électriques délivrés par le dispositif photorécepteur et assumant la décision oui-non, ledit dispositif de contrôle étant caractérisé en ce que le dispositif d'éclairage (3) est commandé par un dispositif de commande (5) de façon à commuter la longueur d'onde du faisceau de lecture (4) entre la première et la seconde valeur prédéterminée; et le dispositif traducteur (16; 17, 18; 19-21; 25-28; 34-39) délivre un signal OUI quand le centre de gravité de l'intensité de la composante du faisceau de lecture (4) diffractée par la microstructure (2) se situe suivant deux directions différentes pour la première et la seconde valeur de la longueur d'onde.

2. Dispositif selon revendication 1, caractérisé en ce que la longueur d'onde du faisceau de lecture (4) est commutée alternativement entre les deux valeurs.

3. Dispositif selon une des revendications 1 ou 2, caractérisé en ce que le dispositif traducteur (16; 17, 18; 19-21) délivre un signal OUI quand le centre de gravité de l'intensité se situe suivant une première direction prédéterminée pour la première valeur de la longueur d'onde et suivant une seconde direction prédéterminée pour la seconde valeur.

4. Dispositif selon une des revendications 1 ou 2, caractérisé en ce que le dispositif traducteur (25-28; 34-39) délivre un signal OUI quand une composante ($\triangle$x; $\triangle$y) et/ou le module ($\triangle$r) et/ou l'argument ($\triangle\varphi$) de la translation du centre de gravité de l'intensité se situent entre des limites prédéterminées lors de la commutation de la longueur d'onde.

5. Dispositif selon revendication 4, caractérisé en ce que le dispositif photorécepteur est constitué par au moins un capteur de position optoélectronique uniaxial (22; 22, 22').

6. Dispositif selon revendication 4, caractérisé en ce que le dispositif photorécepteur est constitué par un capteur de position optoélectronique biaxial (29).

7. Dispositif selon une des revendications 5 ou 6, caractérisé en ce que le capteur de position (22; 29) est un capteur de position continu comportant au moins deux sorties (23, 24; 31, 32, 33), dont la première (23; 31) délivre un signal électrique proportionnel à la coordonné x du centre de gravité de l'intensité et à l'intensité, et la seconde (24; 32) délivre un signal électrique proportionnel à l'intensité; la première et la seconde sortie (23; 31 et 24; 32) sont reliées à un diviseur (25; 34); et le diviseur (25; 34) est relié à un circuit détecteur (26; 36) pour la détermination de la composante x ($\triangle$x) de la translation du centre de gravité de l'intensité.

8. Dispositif selon revendication 7, caractérisé en ce qu'une troisième sortie (33) du capteur de position (29) délivre un signal de sortie proportionnel à la coordonnée y du centre de gravité de l'intensité et à l'intensité; la troisième et la deuxième sortie (33; 32) sont reliées à un second diviseur (35); et le second diviseur (35) est relié à un second circuit détecteur (37) pour détermination de la composante y ($\triangle$y) de la translation du centre de gravité de l'intensité.

9. Dispositif selon revendication 8, caractérisé en ce que le permier et le second circuit détecteur (36; 37) sont reliés à un calculateur (38) qui, à partir de la composante x ($\triangle$x) et de la composante y ($\triangle$y) de la translation du centre de gravité de l'intensité, détermine le module ($\triangle$r) et l'argument ($\varphi$) de la translation.

10. Dispositif selon une quelconque des revendications 7 à 9, caractérisé en ce que les circuits détecteurs (26; 36; 37) sont reliés à un comparateur (37; 39) comparant le signal de sortie du circuit détecteur (26; 36; 37) à des seuils prédéterminés.

11. Dispositif selon revendication 9, caractérisé en ce que le calculateur (38) est relié à un comparateur (39) pour la comparaison des signaux de sortie du calculateur (38) à des seuls prédéterminés.

12. Dispositif selon revendication 2 et une quelconque des revendications 3 à 11, comportant un dispositif transporteur produisant un mouvement relatif entre le document (1) d'une part et le dispositif d'éclairage (3) et le dispositif photorécepteur (14, 15; 22; 22, 22'; 29) d'autre part, ledit dispositif étant caractérisé en ce que le dispositif traducteur (16; 17, 18; 19-21; 25-28; 34-39) délivre un signal OUI quand la phase temporelle de la translation du centre de gravité de l'intensité se situe, par rapport à la phase de commutation de la longueur d'onde, entre des limites prédéterminées.

0 077 917

Fig. 1

Fig. 2

Fig. 3

Fig. 4

Fig. 5

$$\frac{x(t) \cdot I(t)}{I(t)}$$

9

**Fig. 6**

**Fig. 7**

$$y(t) \cdot I(t)$$

$$I(t)$$

$$x(t) \cdot I(t)$$

$$\frac{x(t) \cdot I(t)}{I(t)}$$

$$\frac{y(t) \cdot I(t)}{I(t)}$$

$$\pm \Delta x \qquad \pm \Delta y$$

$$\Delta r = \sqrt{\Delta x^2 + \Delta y^2}$$

$$\varphi = \operatorname{atan} \frac{\Delta y}{\Delta x}$$

**Fig. 8**